(19) Europäisches Patentamt
European Patent Office
Office européen des brevets

(11) **EP 2 571 372 B1**

(12) **EUROPÄISCHE PATENTSCHRIFT**

(45) Veröffentlichungstag und Bekanntmachung des Hinweises auf die Patenterteilung:
**05.08.2015 Patentblatt 2015/32**

(21) Anmeldenummer: **10724235.6**

(22) Anmeldetag: **20.05.2010**

(51) Int Cl.:
**A23C 3/033** *(2006.01)*  **A23L 3/00** *(2006.01)*
**A23L 3/22** *(2006.01)*  **A61L 2/04** *(2006.01)*

(86) Internationale Anmeldenummer:
**PCT/CH2010/000129**

(87) Internationale Veröffentlichungsnummer:
**WO 2011/143782 (24.11.2011 Gazette 2011/47)**

(54) **ANLAGE UND VERFAHREN ZUR PASTEURISIERUNG MINDESTENS EINER FLÜSSIGKEIT**

SYSTEM AND METHOD FOR PASTEURIZING AT LEAST ONE LIQUID

INSTALLATION ET PROCÉDÉ DE PASTEURISATION D'AU MOINS UN LIQUIDE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**27.03.2013 Patentblatt 2013/13**

(73) Patentinhaber: **Miteco AG**
**4800 Zofingen (CH)**

(72) Erfinder: **CADEO, Angelo**
**CH-4665 Oftringen (CH)**

(74) Vertreter: **Schalch, Rainer**
**E. Blum & Co. AG**
**Vorderberg 11**
**8044 Zürich (CH)**

(56) Entgegenhaltungen:
**WO-A1-00/67598      WO-A1-03/077685**
**DE-A1- 2 162 115     DE-A1- 3 510 412**
**NL-C2- 1 024 796     US-A- 2 897 082**
**US-A1- 2002 172 745**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gebiet der Erfindung

Die Erfindung betrifft eine Anlage zur Pasteurisierung eines aus mindestens einer flüssigen, pumpfähigen Komponente bestehendem Flüssigkeitsprodukts, mit einem Einspeisebehälter zur Bereitstellung des Produkts, einer Eingangs- und einer Ausgangsleitung zur Beförderung des Produkts, einem Erhitzungskreislauf zur Erhitzung des Produkts auf Pasteurisierungstemperatur und einem Pasteurisierungskreislauf zur Pasteurisierung des Produkts, und ein Verfahren zur Pasteurisierung des Flüssigkeitsprodukts gemäss den Oberbegriffen der unabhängigen Ansprüche.

Hintergrund

Bei der Herstellung von Flüssigkeitsprodukten sind Vorrichtungen und Verfahren bekannt, welche Lösungen zur Pasteurisierung eines aus einem oder mehreren Komponenten bestehenden Flüssigkeitsprodukts bieten. Zu den Aufgaben solcher Anlagen bzw. Verfahren gehören die Bereitstellung des Flüssigkeitsprodukts, die Pasteurisierung selbst und die Zuführung des gemischten Flüssigkeitsprodukts an Weiterverarbeitungsanlagen. Typischerweise ist ein Weiterverarbeitungsschritt das Abfüllen des Flüssigkeitsprodukts in dafür vorgesehene Behälter. Beispielsweise werden in der Lebensmittelindustrie mit Hilfe solcher Anlagen verschiedenste Erfrischungsgetränke, insbesondere milchhaltige Produkte, etc. hergestellt.

Dabei spielt die Pasteurisierung des unbehandelten Produkts eine zentrale Rolle bei der Sicherstellung der Produktqualität. Die Pasteurisierung ist ein Verfahren, bei dem eine Flüssigkeit kurzzeitig erhitzt und danach wieder abgekühlt wird, wodurch die meisten Keime abgetötet werden. Dabei ist es wichtig, dass das zu pasteurisierende Produkt eine gewisse Zeit unter Einfluss der erhöhten Temperatur bleibt. Diese Zeitspanne wird "Kontaktzeit genannt. Sie beträgt beispielsweise zirka 30 Sekunden bei 75 bis 90° C. Nach dieser Zeit wird das Produkt wieder abgekühlt und gilt als unbedenklich für den Verzehr. Die Kontaktzeit hängt aber auch von der Temperatur ab. Um diese Abhängigkeit zu berücksichtigen hat man eine Grösse, die Pasteurisierungseinheit, eingeführt. Sie berechnet sich nach folgender Formel:

$$PU = t \times 1{,}39^{(T-60°)}$$

Dabei ist t die Verweildauer in Minuten bei der Temperatur T. Um eine zuverlässige Pasteurisierung zu erreichen soll eine im Wesentlichen konstante Anzahl von Pasteurisierungseinheiten eingehalten werden. Man kann also nach dieser Formel innerhalb gewisser Grenzen die Temperatur bei fester Kontaktzeit variieren, oder die Kontaktzeit bei fester Temperatur variieren, so dass PU im Wesentlichen konstant bleibt.

Um dieser Anforderung zu genügen werden die zu pasteurisierenden Produkte in bekannten Lösungen für die notwendige Kontaktzeit durch heiss gehaltene Rohrschlangen geführt. Je nach Form dieser Rohrvorrichtungen, wie z.B. Anzahl der Biegungen, kann der Weg des Produkts bei der konstanten Temperatur verlängert oder verkürzt werden, wodurch sich die Kontaktzeit ändern lässt. Dabei kommen auch parallele Rohrsysteme mit unterschiedlichen Eigenschaften zum Einsatz, wobei die zu pasteurisierende Flüssigkeit entweder durch das eine oder durch das andere Rohrsystem geführt werden kann, um unterschiedlichen Pasteurisierungsanforderungen in derselben Anlage zu genügen.

Anderseits sind auch Lösungen bekannt, bei denen die Temperatur variiert wird, was aber den Nachteil hat, dass eine Temperaturregelung per se nicht effizient ist und sich aufgrund der inhärenten Trägheit einer solchen Regelung, insbesondere bei kleinen Temperaturschwankungen, schwierig gestaltet.

Es sind auch Anlagen bekannt, die eine Kombination der beiden erläuterten Methoden verwenden.

Aus der deutschen Patentanmeldung DE-2162115 ist eine Flüssigkeitsabfüllanlage bekannt, welche einen mit einem Temperaturaustauscher gekoppelten Vorratsbehälter umfasst. Dabei dient ein Füllerbehälter als Puffer für die abzufüllende Flüssigkeit.

Aus der internationalen Patentanmeldung WO 00/67598 A1 sind ein Pasteurisierungsverfahren und eine Pasteurisierungsanlage bekannt. Die Anlage umfasst eine Zuleitung für ein flüssiges Produkt, welches von einer Pumpe gefördert wird, eine Kurzzeiterhitzungsanlage, in der das Produkt auf Pasteurisierungstemperatur gebracht wird und einen Heisshalter, der als Rohrschlange ausgebildet ist und dazu dient, das heisse Produkt während der erforderlichen Pasteurisierungszeit zu führen.

Aus der niederländischen Patentanmeldung NL 1024796 C2 ist eine Vorrichtung zur Sterilisierung von Wasser bekannt.

Aus der internationalen Patentanmeldung WO 03/077685 A1 sind ein Verfahren und eine Vorrichtung zur Erhaltung aseptischer Zustände in einer Saftverarbeitungsanlage bekannt.

Aus dem amerikanischen Patent US 2987082 A sind ein Verfahren und eine Vorrichtung zur Pasteurisierung bekannt.

Aus der deutschen Patentanmeldung DE-3510412 ist eine Vorrichtung zum kontinuierlichen Pasteurisieren von Bier bekannt.

Aus der amerikanischen Patentanmeldung US 2002/172745 A1 sind ein System und eine Vorrichtung zur Produktion von pasteurisierten Getränken aus Konzentrat bekannt.

Nach der Pasteurisierung wird das Produkt beispielsweise abgekühlt und weiterbefördert. Oft wird das auf diese Weise pasteurisierte Produkt in einen so genannten aseptischen Behälter, mit anderen Worten in einen keimfreien Behälter eingefüllt, bevor es beispielsweise an eine Fülleranlage abgegeben wird. Diese Fülleranlagen sind dem Stop-Go Prinzip unterworfen, d.h. es werden nicht kontinuierlich, unterschiedliche Mengen des Flüssigkeitsprodukts entnommen. Muss die Abgabe unterbrochen werden, so wird das Produkt, gegebenenfalls unter Abkühlung, wieder rückgeführt und muss erneut pasteurisiert werden, da die Keimfreiheit nicht mehr gewährleistet werden kann. Überschreitet die Unterbrechung eine bestimmte Zeitspanne, so muss dieser Vorgang wiederholt werden, wodurch dasselbe Produkt mehrmals erhitzt und abgekühlt wird. Dies kann nur,einige Male geschehen, wonach das Produkt durch thermischen Stress unbrauchbar wird. Die Folge ist, dass die Anlage mittels Wasser gereinigt werden muss und erst dann wieder unpasteurisiertes neues Produkt eingefüllt werden kann. Dies ist für die Betreiber solcher Anlagen nachteilig, da sie einerseits wertvolle Produktionszeit und andererseits eine grosse Menge des Produkts verlieren.

Darstellung der Erfindung

Es ist Aufgabe der vorliegenden Erfindung eine Anlage bereitzustellen, welche eine erhöhte Flexibilität beim Auffangen von Abgabeunterbrechungen des Produkts an eine Weiterverarbeitungsanlage schafft. Es ist ferner Aufgabe der Erfindung, ein Verfahren zur Pasteurisierung von Flüssigkeitsprodukten bereitzustellen.

Diese Aufgabe wird mit einer Anlage zur Pasteurisierung eines aus mindestens einer flüssigen, pumpfähigen Komponente bestehendem Flüssigkeitsprodukts gelöst. Die Anlage umfasst einen Einspeisebehälter zur Bereitstellung des unpasteurisierten Produkts, eine Eingangsleitung zur Beförderung des unpasteurisierten Produkts, einen Pasteurisierungskreislauf zur Pasteurisierung des Produkts, wobei der Pasteurisierungskreislauf einen ersten Wärmetauscher umfasst, und eine Ausgangsleitung zur Beförderung des pasteurisierten Produkts. Der Pasteurisierungskreislauf umfasst einen Pufferbehälter zum Halten des Produkts während einer vorgeschriebenen, konstanten Kontaktzeit zur Pasteurisierung und bei einer schwankenden Durchflussmenge des Produkts durch den Pufferbehälter, wobei der Pufferbehälter dem ersten Wärmetauscher nachgeschaltet ist. Die aus der Eingangsleitung in den Pasteurisierungskreislauf in den Pufferbehälter einfliessende Menge des unpasteurisierten Produkts pro Zeiteinheit ist mittels einer ersten, dem Einspeisebehälter nachgeschalteten Pumpe regelbar. Der Pasteurisierungskreislauf umfasst eine zweite, dem Pufferbehälter nachgeschaltete Pumpe zur Regelung der Abgabemenge des pasteurisierten Produkts pro Zeiteinheit aus dem Pufferbehälter in die Ausgangsleitung. Eine Steuerung ist zur Berechnung der erforderlichen, aus der Eingangsleitung in den Pasteurisierungskreislauf einzuspeisenden und aus dem Pasteurisierungskreislauf in die Ausgangsleitung abzugebenden Produktmenge pro Zeiteinheit in Abhängigkeit von mindestens einem Parameter vorgesehen. Der Pufferbehälter umfasst mindestens eine in seinem Inneren angeordnete Schikanenvorrichtung zur Steuerung der Produktflussrichtung.

Weiter wird ein Verfahren zum Betrieb einer erfindungsgemässen Anlage zur Pasteurisierung eines aus mindestens einer flüssigen, pumpfähigen Komponente bestehendem Flüssigkeitsprodukts, bei dem das unpasteurisierte Produkt aus einem Einspeisebehälter in eine Eingangsleitung zugeführt, anschliessend in einem Pasteurisierungskreislauf pasteurisiert und das pasteurisierte Produkt in eine Ausgangsleitung abgegeben wird. Das Produkt wird im Pasteurisierungskreislauf einem Pufferbehälter zugeführt und darin während einer vorgeschriebenen, konstanten Kontaktzeit für die Pasteurisierung und bei einer schwankenden Durchflussmenge des Produkts durch den Pufferbehälter gehalten.

Anspruchsgemäss werden also eine Anlage und ein Verfahren mit einer Pufferfunktion im Pasteurisierungskreislauf bereitgestellt. Dadurch werden die konventionellen Lösungswege verlassen, welche auf der Verwendung von Rohrschlangen und auf eine konstante Fördermenge zur Einhaltung der Kontaktzeit basieren und eine Temperaturregelung voraussetzen. Bei der vorliegenden Lösung ergibt sich durch den Einsatz des Pufferbehälters, welcher eine variable Menge an zu pasteurisierendem Produkt aufnehmen kann, die Einhaltung der Kontaktzeit. Diese Regelung ist einfacher zu verwirklichen und ergibt eine bessere Energiebilanz. Insbesondere kann durch Steuerung/Regelung des Zuflusses im Pufferbehälter und allenfalls auch durch Steuerung/Regelung der Abgabewege aus dem Pufferbehälter das Niveau des Produkts im Pufferbehälter eingestellt werden.

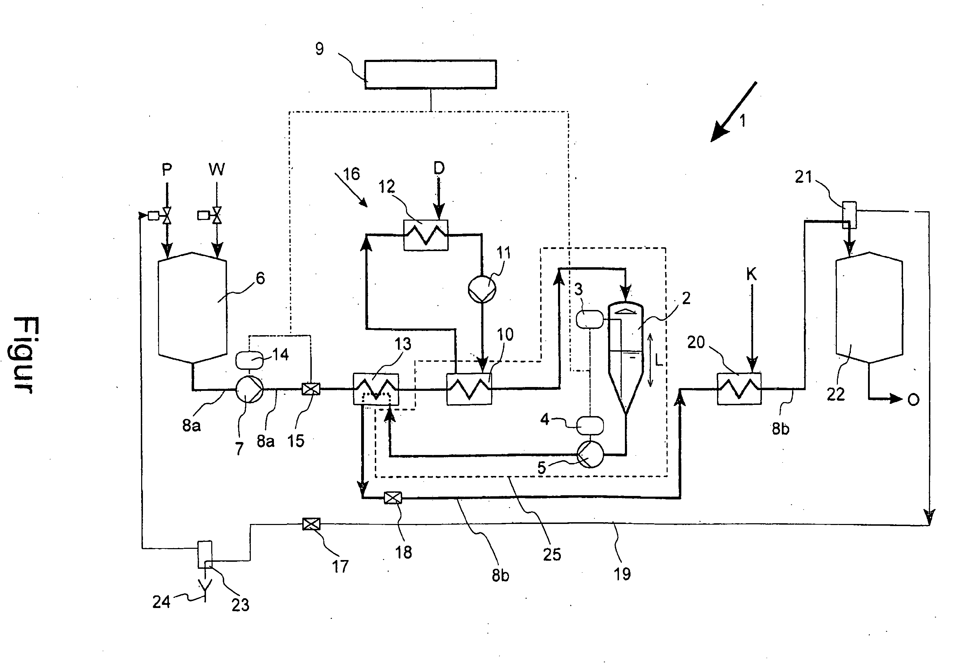

Kurze Beschreibung der Zeichnung

Die Figur zeigt einen Schaltplan eines Ausführungsbeispiels einer erfindungsgemässen Anlage mit dazugehörigen Komponenten und ihren Verbindungen.

Weg zur Ausführung der Erfindung

Weitere vorteilhafte Ausgestaltungen der Erfindung ergeben sich aus den abhängigen Ansprüchen und den anhand der Figur nachfolgend dargestellten Ausführungsbeispielen.

Die Figur zeigt eine bevorzugte Ausführungsform der Anlage 1 mit dazugehörigen Bestandteilen und ihren Verbindungen.

Zunächst werden die Komponenten der Anlage 1 und ihre Verbindungen und anschliessend der Weg des Produkts P durch die Anlage 1 unter Berücksichtigung der speziellen Merkmale der Komponenten erläutert.

Das zu pasteurisierende Produkt P wird in einen Einspeisebehälter 6 eingefüllt. In den Behälter 6 kann auch Wasser W eingefüllt werden. Die Funktion des Wassers W wird an späterer Stelle näher erläutert. Der Einspeisebehälter 6 ist mit einem Pasteurisierungskreislauf 25, welcher durch die gestrichelten Linien angedeutet ist, mittels einer Eingangsleitung 8a verbunden. In der Eingangsleitung 8a ist dem Einspeisebehälter 6 eine erste Pumpe 7 nachgeschaltet, welche vorzugsweise eine variable Durchflussmenge hat. Die Ist-Durchflussmenge durch die Eingangsleitung 8a wird von einem Durchflussmesser 15 gemessen, wobei das Messergebnis einer Steuerung 9 zugeführt wird. Die Steuerung 9 steuert bei Abweichungen der Ist-Durchflussmenge von der Soll-Durchflussmenge ein erstes Stellglied 14, welches in bekannter Weise die erste Pumpe 7 nachregelt, bis eine korrekte Durchflussmenge gemessen wird. Die Fördermenge kann aber auch auf andere Weisen geregelt werden, beispielsweise mittels eines der ersten Pumpe 7 nachgeschalteten Regelventils. Dem Durchflussmesser 15 ist eine Rekuperationszone 13 nachgeschaltet, welche für einen Wärmeaustausch des durch sie fliessenden Produkts sorgt. Dies wird an späterer Stelle näher erläutert. Der Rekuperationszone 13 ist ein Pasteurisierungskreislauf 25 nachgeschaltet. Dieser umfasst einen ersten Wärmetauscher 10, beispielsweise einen Plattenwärmetauscher, welcher an einen externen Erhitzungskreislauf 16 gekoppelt ist. Selbstverständlich kann der Erhitzungskreislauf auch Teil des Pasteurisierungskreislaufs 25 sein.

Der Aufbau eines Erhitzungskreislaufs 16 ist bekannt und wird der Vollständigkeit Halber hier nur kurz erläutert. Er umfasst eine Transportleitung für heisses Wasser zur Energiezuführung an den ersten Wärmetauscher 10, einen zweiten Wärmetauscher 12, welcher die Wärmeenergie des heissen Wassers im Erhitzungskreislauf 16 mittels zugeführtem Dampf D aufrechterhält und einer Pumpe 11 zur Beförderung des heissen Wassers durch die Transportleitung.

Im Pasteurisierungskreislauf 25 ist dem ersten Wärmetauscher 10 ein Pufferbehälter 2 nachgeschaltet in dem die Hauptphase der Pasteurisierung, nämlich die Aufbewahrung des Produkts bei einer Soll-Temperatur für die Dauer der Kontaktzeit, stattfindet. Der Pufferbehälter hat beispielsweise einen Inhalt von 100 oder 300 Liter. Er umfasst mindestens eine in seinem Inneren angeordnete, insbesondere austauschbare, Schikanenvorrichtung zur Steuerung der Produktflussrichtung.

Die Schikanenvorrichtung ist aus Übersichtlichkeitsgründen hier nicht dargestellt. Ihre Aufgabe wird im Zusammenhang mit der Erläuterung des Produktweges durch die Anlage näher beschrieben. Weiter umfasst der Pufferbehälter 2 vorzugsweise mindestens eine seine Wandung im Wesentlichen gesamtheitlich umschliessende, hier nicht dargestellte, Isolationsschicht zur thermischen Isolation des Inhalts gegenüber der Aussenumgebung. Vorzugsweise ist die Innenwandung des Pufferbehälters 2 glatt poliert.

Ein Füllstandmesser 3 zur Messung des Füllstands innerhalb des Pufferbehälters 2 ist am Pufferbehälter 2 vorgesehen. Der variable Füllstand ist mit dem Doppelpfeil L dargestellt.

Dem Pufferbehälter 2 ist stromabwärts eine zweite Pumpe 5 nachgeschaltet, welche vorzugsweise eine Pumpe mit variabler Durchflussmenge ist. Die Pumpe ist an einem zweiten Stellglied 4, beispielsweise einem Motor mit Frequenzumformer, zur Einstellung der gewünschten Durchflussmenge des pasteurisierten Produkts P angeschlossen.

Die Steuerung 9 ist zur Erfassung des aktuellen Füllstands des Pufferbehälters 2 mit dem Füllstandmesser 3 verbunden. Weiter ist sie zur Erfassung und Steuerung der aktuellen Durchflussmenge des Produkts P durch die zweite Pumpe 5 mit dem zweiten Stellglied 4 verbunden. Die Verbindungen der Steuerung 9 sind mit den strichgepunkteten Linien dargestellt. Sie sind hier nicht abschliessend dargestellt. Vielmehr kann die Steuerung 9 zur Erfassung weiterer Parameter der Anlage 1, wie z.B. der Temperatur des Produkts P in verschiedenen Phasen, ebenfalls eingesetzt werden.

Die zweite Pumpe 5 ist am Ausgang des Pasteurisierungskreislaufs 25 mit der Rekuperationszone 13 verbunden. Nach der Rekuperationszone 13 wird das pasteurisierte Produkt in eine Ausgangsleitung 8b geführt. In der Ausgangsleitung 8b ist ein erstes Refraktometer 18 zur Bestimmung der Dichte des pasteurisierten Produkts P geschaltet. Weiter ist ein dritter Wärmetauscher 20 in der Ausgangsleitung 8b geschaltet der zur Kühlung des pasteurisierten Produkts P mittels Kühlwasser K eingesetzt wird. Nach dem dritten Wärmetauscher 20 kann das Endprodukt P an eine Weiterverarbeitungsanlage, wie z.B. an einen hier nicht dargestellten Füller abgegeben werden. Alternativ kann es in einen aseptischen Behälter 22 eingeleitet werden, aus welchem es an die Weiterverarbeitungsanlage durch die Leitung O abgegeben wird. Am Eingang des aseptischen Behälters 22 kann eine erste Weiche 21 vorgesehen sein, um das Endprodukt in eine Entsorgungsleitung 19 zu dessen Entsorgung umzuleiten. In dieser Leitung 19 ist ein zweites Refraktometer 17 geschaltet, welches die Dichte des zu entsorgenden Endprodukts P misst. Am Ausgang der Entsorgungsleitung 19 ist eine zweite Weiche 23 angeordnet, mittels welcher das abgeführte Endprodukt P entweder in einen Abfluss 24 entsorgt werden kann oder in den Einspeisebehälter 6 rückgeführt werden kann.

Nun wird der Weg des Produkts durch die Anlage 1 erläutert. Dabei werden zum besseren Verständnis Temperaturzahlenwerte des Produkts P angegeben, die jedoch nur als Beispiel dienen sollen. Andere Temperaturwerte sind durchaus möglich.

Das unpasteurisierte Produkt P wird aus dem Einspeisebehälter 6 mittels der ersten Pumpe 7 durch die Rekuperationszone 13 gepumpt. Vor der Rekuperationszone 13 hat das Produkt P eine Temperatur von 20° C. In der Rekuperationszone 13 wird es stark erhitzt und hat am Ausgang der Rekuperationszone 13 bereits eine Temperatur von 85° C. Es wird weiter mittels des ersten Wärmetauschers 10 auf die geforderte Pasteurisierungstemperatur von 90° C erhitzt und gelangt anschliessend in den Pufferbehälter 2. Aufgrund der Isolation des Pufferbehälters 2 behält das Produkt seine Temperatur von 90° C.

Im Pufferbehälter 2 durchlaufen die Produktteilchen den Weg bis zum Ausgang des Pufferbehälters 2 und werden während dieser Kontaktzeit pasteurisiert. Beim Durchlaufen des Wegs von Eingang des Pufferbehälters 2 zu seinem Ausgang ist es erwünscht, dass eine Kolbenströmung vorherrscht, um sicherzustellen, dass im Wesentlichen alle Teilchen des Produkts P für die Dauer derselben Kontaktzeit im Pufferbehälter 2 verweilen. Die Verwendung des Pufferbehälters 2 bringt aufgrund seiner Beschaffenheit einen weiteren Vorteil mit sich; die Strömung darin ist weniger turbulent als durch Rohrschlangen, bei denen bei jeder Biegung eine Turbulenz entsteht. Um aber Turbulenzen noch weiter zu vermindern wird die bereits erläuterte mindestens eine Schikanenvorrichtung verwendet. Dabei kann es sich beispielsweise um ein Gitter handeln, durch welches die Richtung des Geschwindigkeitsvektors der durch das Gitter durchfliessenden Teilchen parallelisiert wird und mehrheitlich in Richtung des Ausgangs des Pufferbehälters 2 zeigt. Das Gitter kann je nach Konsistenz des Produkts fein oder grobmaschig dimensioniert werden und ist in diesem Sinne vorzugsweise austauschbar.

Nach Durchlauf durch den Pufferbehälter 2 tritt das pasteurisierte Produkt aus dem Pufferbehälter 2 hinaus und wird mittels der zweiten Pumpe 5 weiterhin mit einer Temperatur von annähernd 90° C in die Rekuperationszone 13 befördert. Der Weg des pasteurisierten Produkts P in der Rekuperationszone 13 ist mit der gestrichelten Linie skizziert. Durch die Energiebilanz hat das Produkt beim Ausgang aus der Rekuperationszone 13 und Eintritt in die Ausgangsleitung 8b eine Temperatur von 25° C. Dies ist bekannt und wird hier nicht weiter erläutert.

Anschliessend wird das pasteurisierte Produkt P in den dritten Wärmetauscher 20 geleitet und darin auf eine gewünschte Endtemperatur abgekühlt. Schliesslich wird das abgekühlte, pasteurisierte Endprodukt P in den aseptischen Behälter 22 und weiter in die Weiterverarbeitungsvorrichtung transportiert. Diese Art der Abfüllung wird "aseptic cold-filling" genannt.

Alternativ zur Kaltabfüllung (aseptic coldfilling) kann die vorliegende Erfindung unter anderem auch für eine sogenannte "hot-filling" Abfüllung eingesetzt werden, welche hier nicht dargestellt ist. Bei dieser Heissabfüllung wird das noch warme, pasteurisierte Produkt P direkt abgefüllt, wodurch der dritte Wärmetauscher 20, die Rekuperationszone 13 und der optionale aseptische Behälter 22 wegfallen.

Wie schon erläutert wird die aus der Eingangsleitung 8a in den Pasteurisierungskreislauf 25 in den Pufferbehälter 2 einfliessende Menge des unpasteurisierten Produkts P pro Zeiteinheit mittels der ersten, dem Einspeisebehälter 6 nachgeschalteten Pumpe 7 geregelt und die Abgabemenge des pasteurisierten Produkts P pro Zeiteinheit mittels der dem Pufferbehälter 2 nachgeschalteten zweiten Pumpe 5 des Pasteurisierungskreislaufs 25 geregelt. Durch das Zusammenspiel der ersten und der zweiten Pumpe 7, 5 kann eine effiziente Niveauregelung im Pufferbehälter 2 erzielt werden, so dass einerseits immer die Kontaktzeit im Pufferbehälter 2 eingehalten werden kann und andererseits die Abgabemenge des pasteurisierten Produkts P an die Anforderungen der Weiterverarbeitungsvorrichtung angepasst werden kann. Dieses Zusammenspiel wird mittels der Steuerung 9 kontrolliert und angepasst, indem sie die erforderlichen, aus der Eingangsleitung 8a in den Pasteurisierungskreislauf 25 einzuspeisenden und aus dem Pasteurisierungskreislauf 25 in die Ausgangsleitung 8b abzugebenden Produktmenge pro Zeiteinheit in Abhängigkeit von mindestens einem Parameter berechnet. Dieser Parameter kann beispielsweise der Füllstand in Pufferbehälter 2 sein. Als weiterer Parameter kann der Füllstand im aseptischen Behälter 21 verwendet werden. Andere Parameter, wie z.B. eine Entnahmerate des Endprodukts P aus dem aseptischen Behälter, usw, sind auch möglich. Selbstverständlich können einzelne Parameter oder eine Kombination von Parametern verwendet werden. Nach der Berechnung durch die Steuerung 9 wird die erforderliche Produktmenge pro Zeiteinheit für die erste und die zweite Pumpe 7, 5 mittels des jeweils zugehörigen Stellglieds 14, 4 eingestellt.

Ein besonderer Betriebsfall entsteht bei einem Stopp der Abführung des Endprodukts P an die Weiterverarbeitungsvorrichtung. Dies stellt einen häufigen Betriebsfall dar und muss daher bei einer Pasteurisierungsanlage berücksichtigt werden. Ein solcher Stopp kann z. B. durch Unterbrechungen in der der Pasteurisierungsanlage nachgeschalteten Anlage, wie z.B. Füller oder Etikettiermaschine, durch Änderungen der Abfüllleistung entstehen.

Bei bekannten Lösungen mit konstantem Produktdurchfluss muss das Produkt in einem solchen Fall zum Einspeisebehälter rückgeführt werden. Die Alternative wäre, das Produkt zu entsorgen, bis der gesamte Kreislauf ausgepumpt ist. Dies würde aber zu einer zu grossen Verschwendung des Produkts führen, zumal in vielen Fällen der Abgabestopp nur von kurzer Dauer ist. Aus diesem Grund wird das Produkt wieder rückgeführt und vermischt sich im Einspeisebehälter 6 mit dem noch unpasteurisierten bereits vorhandenen Produkt. Nach erneutem Abgabestart wird der rückgeführte Teil des Produkts noch einmal pasteurisiert. Bei mehrmaligem Abgabestopp kann es passieren, dass das Produkt mehrmals pasteurisiert werden muss, wodurch es seine Qualität verliert und nicht mehr konsumierbar ist. Als Folge muss die Pasteurisierungsanlage vollständig entleert und der Inhalt entsorgt werden. Die Praxis zeigt, dass dieser Fall regelmässig eintritt. Dadurch entstehen dem Betreiber hohe Kosten, die es zu vermeiden oder minimieren gilt.

Bei der vorliegenden Erfindung wird dieser unerwünschte Effekt mindestens minimiert, da aufgrund der Verwendung des Pufferbehälters 2 eine bestimmte Dauer des Abgabestopps überbrückt werden kann. Erst wenn diese Zeitspanne verstrichen ist, ohne dass die Produktion wieder anfährt, muss das Produkt P rückgeführt werden. Folglich wird die Anzahl der Rückführungen und der erneuten Pasteurisierungen verringert, wodurch weiter die vollständige Entleerung der Pasteurisierungsanlage 1 in vielen Fällen verhindert werden kann.

Nach einem Stopp der Abgabe des Endprodukts an die Weiterverarbeitungsanlage wird mittels der Steuerung 9 ein Stopp oder eine Reduktion der Abgabe des pasteurisierten Produkts P aus dem Pasteurisierungskreislauf 25 bewirkt. Nach dem Stopp der Abgabe des Endprodukts P wird ausserdem die Einspeisung des unpasteurisierten Produkts P in den Pufferbehälter 2 auf eine minimale Produktmenge pro Zeiteinheit reduziert. Die minimale Produktmenge pro Zeiteinheit kann z.B. im Bereich von zirka 10% der Nenndurchflussmenge des Produkts P liegen. Andere Werte sind aber auch möglich. Nach Erreichen eines maximalen Füllstands des Pufferbehälters 2 und/oder einer maximalen Stoppzeit wird die Einspeisung in den Pufferbehälter mittels der Steuerung 9 gänzlich eingestellt.

Die Förderung des Produkts (P) kann jedoch nach dem Stopp der Abgabe des Endprodukts während einer zulässigen Unterbruchzeit der Abgabe des Endprodukts wieder aufgenommen werden. Nur nach Verstreichen der Unterbruchzeit wird das Produkt im Falle der "aseptic coldfilling" Abfüllung aus der Eingangsleitung 8a, dem Pasteurisierungskreislauf 25 und der Ausgangsleitung 8b entsorgt. Dies geschieht durch Zuführung von Wasser W in den Einspeisebehälter 6 und Pumpen des Wassers W in die Eingangsleitung 8a, weiter in den Pasteurisierungskreislauf 25, weiter in die Ausgangsleitung 8b und schliesslich in die Entsorgungsleitung 19. Der Zeitpunkt der vollständigen Entsorgung wird dabei mittels des zweiten Refraktometers 17 gemessen. Im Falle der hier nicht dargestellten "hot-filling" Abfüllung würde in der Entsorgungsleitung ein Wärmetauscher zur Abkühlung des zu entsorgenden Produkts geschaltet sein.

Ein weiterer Vorteil der Erfindung besteht darin, dass im Fall des Stopps der Abgabe des Endprodukts die zulässige Unterbruchzeit aufgrund der Reduzierung der in den Pufferbehälter 2 eingespeisten Menge des unpasteurisierten Produkts P auf eine minimale Produktmenge pro Zeiteinheit wesentlich erhöht werden kann. Beispielsweise ist bei einer Reduzierung der Produktmenge auf 10% der Nenndurchflussmenge eine zehnfache Unterbruchzeit möglich. Mit anderen Worten erhöht sich die Pufferzeit bis die Anlage komplett entleert werden muss.

Bei der Wiederaufnahme des Betriebs der Pasteurisierungsanlage 1 misst das erste Refraktometer 18 die Dichte der durchfliessenden Flüssigkeit in der Ausgangsleitung 8b, wodurch der Zeitpunkt der Betriebsbereitschaft und der möglichen erneuten Abgabe des Endprodukts bestimmt werden kann.

Die vorliegende Erfindung erlaubt eine Erhöhung der Flexibilität bei der Pasteurisierung, insbesondere im Stop-Go Betrieb einer Getränkeherstellungsanlage, durch die Verwendung eines aktiven Puffers für das herzustellende Produkt und eine signifikante Einsparung des Produkts bei Betriebsausfällen. Ferner kann die Produktionsmenge aufgrund der variabel einzustellenden Durchflussmenge des Produkts an die Anforderungen angepasst werden.

Obwohl vorteilhafte Ausführungsformen der Erfindung gezeigt und beschrieben worden sind, ist die Erfindung nicht auf diese beschränkt, sondern sie kann, im Rahmen des Geltungsbereichs der folgenden Ansprüche, auf andere, mannigfaltige Weisen, ausgeführt und angewendet werden.

## Bezugszeichenliste

| | | |
|---|---|---|
| 1 | = | Pasteurisierungsanlage |
| 2 | = | Pufferbehälter |
| 3 | = | Füllstandmesser |
| 4 | = | zweites Stellglied |
| 5 | = | zweite Pumpe |
| 6 | = | Einspeisebehälter |
| 7 | = | erste Pumpe |
| 8a | = | Eingangsleitung |
| 8b | = | Ausgangsleitung |
| 9 | = | Steuerung |
| 10 | = | erster Wärmetauscher |
| 11 | = | Pumpe des Erhitzungskreislaufs |
| 12 | = | zweiter Wärmetauscher |
| 13 | = | Rekuperationszone |
| 14 | = | erstes Stellglied |
| 15 | = | Durchflussmesser |
| 16 | = | Erhitzungskreislauf |
| 17 | = | zweites Refraktometer |
| 18 | = | erstes Refraktometer |
| 19 | = | Entsorgungsleitung |
| 20 | = | dritter Wärmetauscher |
| 21 | = | erste Weiche |
| 22 | = | aseptischer Behälter |
| 23 | = | zweite Weiche |
| 24 | = | Abfluss |
| 25 | = | Pasteurisierungskreislauf |
| D | = | Dampf |
| P | = | Produkt |
| O | = | Ausgabe des Endprodukts |
| K | = | Kühlwasser |
| L | = | Füllstand im Pufferbehälter |
| W | = | Wasser |

## Patentansprüche

1. Anlage (1) zur Pasteurisierung eines aus mindestens einer flüssigen, pumpfähigen Komponente bestehendem Flüssigkeitsprodukts (P), mit einem Einspeisebehälter (6) zur Bereitstellung des unpasteurisierten Produkts, einer Eingangsleitung (8a) zur Beförderung des unpasteurisierten Produkts, einem Pasteurisierungskreislauf (25) zur Pasteurisierung des Produkts (P), wobei der Pasteurisierungskreislauf (25) einen ersten Wärmetauscher (10) umfasst, und einer Ausgangsleitung (8b) zur Beförderung des pasteurisierten Produkts **dadurch gekennzeichnet, dass** der Pasteurisierungskreislauf (25) einen Pufferbehälter (2) umfasst, welcher derart ausgestaltet ist, dass er das Produkt (P) während einer vorgeschriebenen, konstanten Kontaktzeit zur Pasteurisierung und bei einer schwankenden Durchflussmenge des Produkts (P) durch den Pufferbehälter (2) hält, wobei der Pufferbehälter dem ersten Wärmetauscher (10) nachgeschaltet ist, wobei die aus der Eingangsleitung (8a) in den Pasteurisierungskreislauf (25) in den Pufferbehälter (2) einfliessende Menge des unpasteurisierten Produkts pro Zeiteinheit mittels einer ersten, dem Einspeisebehälter (8a) nachgeschalteten Pumpe (7) regelbar ist, wobei der Pasteurisierungskreislauf (25) eine zweite, dem Pufferbehälter (2) nachgeschaltete Pumpe (5) zur Regelung der Abgabemenge des pasteurisierten Produkts pro Zeiteinheit aus dem Pufferbehälter (2) in die Ausgangsleitung (8b) umfasst, wobei eine Steuerung (9) zur Berechnung der erforderlichen, aus der Eingangsleitung (8a) in den Pasteurisierungskreislauf (25) einzuspeisenden und aus dem Pasteurisierungskreislauf (25) in die Ausgangsleitung (8b) abzugebenden Produktmenge pro Zeiteinheit in Abhängigkeit von mindestens einem Parameter vorgesehen ist, wobei der Pufferbehälter (2) mindestens eine in seinem Inneren angeordnete Schikanenvorrichtung zur Steuerung der Produktflussrichtung umfasst.

2. Anlage nach Anspruch 1, **dadurch gekennzeichnet, dass** die erste Pumpe (7) eine Pumpe mit variabler Durchflussmenge ist.

3. Anlage nach Anspruch 1 oder 2, **dadurch gekennzeichnet, dass** die zweite Pumpe (5) eine Pumpe mit variabler Durchflussmenge ist.

4. Anlage nach einem der vorangehenden Ansprüche, **dadurch gekennzeichnet, dass** ein Füllstandmesser (3) zur Messung des Füllstands innerhalb des Pufferbehälters (2) vorgesehen ist.

5. Anlage nach einem der vorangehenden Ansprüche, **dadurch gekennzeichnet, dass** der Pufferbehälter (2) mindestens eine seine Wandung im Wesentlichen gesamtheitlich umschliessende Isolationsschicht zur thermischen Isolation gegenüber der Aussenumgebung umfasst.

6. Verfahren zum Betrieb einer Anlage nach einem der vorangehenden Ansprüche zur Pasteurisierung eines aus mindestens einer flüssigen, pumpfähigen Komponente bestehendem Flüssigkeitsprodukts (P), bei dem das unpasteurisierte Produkt aus einem Einspeisebehälter (6) in eine Eingangsleitung (8a) zugeführt, anschliessend in einem Pasteurisierungskreislauf (25) pasteurisiert und das pasteurisierte Produkt in eine Ausgangsleitung (8b) abgegeben wird, **dadurch gekennzeichnet, dass** das Produkt (P) im Pasteurisierungskreislauf (25) einem Pufferbehälter (2) zugeführt und darin während einer vorgeschriebenen, konstanten Kontaktzeit für die Pasteurisierung und bei einer schwankenden Durchflussmenge des Produkts (P) durch den Pufferbehälter (2) gehalten wird.

7. Verfahren nach Anspruch 6, **dadurch gekennzeichnet, dass** das Produkt (P) aus der Eingangsleitung (8a) in den Pasteurisierungskreislauf (25) in den Pufferbehälter (2) mittels einer ersten, dem Einspeisebehälter (6) nachgeschalteten Pumpe (7), insbesondere einer Pumpe mit variabler Durchflussmenge, eingespeist wird, wobei die eingespeiste Produktmenge des unpasteurisierten Produkts pro Zeiteinheit von der ersten Pumpe (7) geregelt wird.

8. Verfahren nach Anspruch 6 oder 7, **dadurch gekennzeichnet, dass** das pasteurisierte Produkt aus dem Pufferbehälter (2) mittels einer zweiten, dem Pufferbehälter (2) nachgeschalteten Pumpe (5), insbesondere einer Pumpe mit variabler Durchflussmenge, an die Ausgangsleitung (8b) abgegeben wird, wobei die Abgabemenge des pasteurisierten Produkts aus dem Pufferbehälter (2) pro Zeiteinheit von der zweiten Pumpe (5) geregelt wird.

9. Verfahren nach Anspruch 7 oder 8, **dadurch gekennzeichnet, dass** die von der ersten und/oder der zweiten Pumpe (7, 5) jeweils zu fördernde Abgabemenge des Produkts (P) mittels der Steuerung (9) in Abhängigkeit von mindestens einem Parameter berechnet wird und mittels jeweils eines Stellglieds (14, 4) für jede Pumpe (7, 5) eingestellt wird.

10. Verfahren nach einem der Ansprüche 6 bis 9, **dadurch gekennzeichnet, dass** nach einem Stopp der Abgabe des Endprodukts an eine Weiterverarbeitungsanlage ein Stopp der Abgabe des pasteurisierten Produkts aus dem Pasteurisierungskreislauf (25) mittels der Steuerung (9) bewirkt wird.

11. Verfahren nach Anspruch 10, dadurch gekennzeichnen, dass nach dem Stopp oder der Reduktion der Abgabe des Endprodukts die Einspeisung des unpasteurisierten Produkts in den Pufferbehälter (2) auf eine minimale Produktmenge pro Zeiteinheit reduziert wird und dass nach Erreichen eines maximalen Füllstands des Pufferbehälters (2) und/oder einer maximalen Stoppzeit die Einspeisung in den Pufferbehälter (2) mittels der Steuerung (9) gänzlich eingestellt wird.

**12.** Verfahren nach Anspruch 10 oder 11, **dadurch gekennzeichnet, dass** bei dem Stopp der Abgabe des Endprodukts die Förderung des Produkts (P) während einer zulässigen Unterbruchzeit der Abgabe des Endprodukts wieder aufgenommen werden kann und nach Verstreichen der zulässigen Unterbruchzeit das Produkt (P) aus der Eingangsleitung (8a), dem Pasteurisierungskreislauf (25) und der Ausgangsleitung (8b) durch Zuführung von Wasser (W) in den Einspeisebehälter (6) und Pumpen des Wassers (W) in die Eingangsleitung (8a), weiter in den Pasteurisierungskreislauf (25), weiter in die Ausgangsleitung (8b) und schliesslich in eine Entsorgungsleitung (19) entsorgt wird.

**13.** Verfahren nach einem der Ansprüche 6 bis 12, **dadurch gekennzeichnet, dass** der Füllstand des Produkts (P) im Pufferbehälter (2) mittels eines Füllstandmessers (3) gemessen wird.

**14.** Verfahren nach einem der Ansprüche 6 bis 13, **dadurch gekennzeichnet, dass** als Parameter ein Füllstand in Pufferbehälter (2) und/oder ein Füllstand- in einem aseptischen Behälter (21) und/oder eine Entnahmerate des Endprodukts P aus dem aseptischen Behälter (21) von der Steuerung (9) zur Berechnung der erforderlichen, aus der Eingangsleitung (8a) in den Pasteurisierungskreislauf (25) einzuspeisenden und aus dem Pasteurisierungskreislauf (25) in die Ausgangsleitung (8b) abzugebenden Produktmenge pro Zeiteinheit verwendet wird.

**Claims**

**1.** Installation (1) for pasteurizing a liquid product (P) consisting of at least one liquid component that can be pumped, with a supply container (6) for supplying the unpasteurized product, an inlet line (8a) for conveying the unpasteurized product, a pasteurization circuit (25) for pasteurizing the product (P), wherein the pasteurization circuit (25) comprises at least a first heat exchanger (10) and an outlet line (8b) for conveying the pasteurized product, **characterized in that** the pasteurization circuit (25) comprises a buffer container (2) adapted to hold the product (P) during a prescribed constant contact time for pasteurization and a fluctuating flow rate of the product (P) through the buffer container (2), wherein the buffer container is arranged downstream of the first heat exchanger (10), wherein the quantity of the unpasteurized product per time unit flowing out of the inlet line (8a) into the pasteurization circuit (25) into the buffer container (2) is regulated by means of a first pump (7) arranged downstream of the supply container (6), wherein the pasteurization circuit (25) comprises a second pump (5) arranged downstream of the buffer container (2), for regulating the delivery quantity of the pasteurized product per time unit out of the buffer container (2) into the outlet line (8b), wherein a controller (9) is provided for calculating the required product quantity per time unit to be supplied out of the inlet line (8a) into the pasteurization circuit (25) and out of the pasteurization circuit (25) into the outlet line (8b) depending on at least one parameter, wherein the buffer container (2) comprises, arranged in its interior, at least one baffle device for controlling the product flow direction.

**2.** Installation according to claim 1, **characterized in that** the first pump (7) is a pump with variable flow rate.

**3.** Installation according to claim 1 or 2, **characterized in that** the second pump (5) is a pump with variable flow rate.

**4.** Installation according to one of the preceding claims, **characterized in that** a filling level meter (3) is provided for measuring the filling level inside the buffer container (2).

**5.** Installation according to one of the preceding claims, **characterized in that** the buffer container (2) comprises at least one insulating layer for thermally insulating it from the ambient, which surrounds its walls substantially entirely.

**6.** Method for operating an installation according to one of the preceding claims for pasteurizing a liquid product (P) consisting of at least one liquid component that can be pumped, for which the unpasteurized product is supplied out of a supply container (6) into an inlet line (8a), subsequently pasteurized in a pasteurization circuit (25) and the pasteurized product is supplied into an outlet line (8b), **characterized in that** the product (P) is supplied to a buffer container (2) in the pasteurization circuit (25) and is held in it during a prescribed constant contact time for the pasteurization and in the presence of a fluctuating flow rate of the product (P) through the buffer container (2).

**7.** Method according to claim 6, **characterized in that** the product (P) is supplied out of the inlet line (8a) into the pasteurization circuit (25) into the buffer container (2) by means of a first pump (7) arranged downstream of the supply container (6), particularly a pump with a variable flow rate, wherein the supplied quantity of the unpasteurized product per time unit is regulated by the first pump (7).

**8.** Method according to claim 6 or 7, **characterized in that** the pasteurized product is supplied out of the buffer container (2) by means of a second pump (5) arranged downstream of the buffer container (2), particularly a pump with a variable flow rate, into the outlet line (8b), wherein the delivery quantity of the pasteurized product per time unit out of the buffer container (2) is regulated by the second pump (5).

**9.** Method according to claim 7 or 8, **characterized in that** the delivery quantity of the product (P) which is conveyed by the first and/or the second pump (7, 5) is calculated by means of a controller (9) depending on at least one parameter and is adjusted by means of a control element (14, 4) for each pump (7, 5).

**10.** Method according to one of the claims 6 to 9, **characterized in that** after stopping the delivery of the end product to an installation for further processing, the delivery of the pasteurized product out of the pasteurization circuit (25) is effected by the controller (9).

**11.** Method according to claim 10, **characterized in that** after the stop or the reduction of the delivery of the end product the supply of the unpasteurized product into the buffer container (2) is reduced to a minimum product quantity per time unit and **in that** after reaching a maximum filling level of the buffer container (2) and/or a maximum stop time, the supply into the buffer container (2) is completely stopped by means of the controller (9).

**12.** Method according to claim 10 or 11, **characterized in that** during the stop of the delivery of the end product the conveying of the product (P) can be restarted during an allowable interruption time of the supply of the end product and, after the allowable interruption time has passed, the product (P) is disposed of from the inlet line (8a), the pasteurization circuit (25) and the outlet line (8b) by supplying water (W) into the supply container (6) and by pumping the water (W) into the inlet line (8a), further into the pasteurization circuit (25), further into the outlet line (8b) and finally into a disposal line (19).

**13.** Method according to one of the claims 6 to 12, **characterized in that** the filling level of the product (P) into the buffer container (2) is measured by means of a filling level meter (3).

**14.** Method according to one of the claims 6 to 13, **characterized in that** a filling level in the buffer container (2) and/or a filling level in an aseptic container (21) and/or an extraction rate of the end product (P) from the aseptic container (21) is used by the controller (9) as parameter for calculating the required product quantity per time unit to be supplied out of the input line (8a) into the pasteurizing circuit (25) and out of the pasteurizing circuit (25) into the outlet line (8b).

**Revendications**

**1.** Installation (1) de pasteurisation d'un produit liquide (P) consistant d'au moins un composant liquide pompable, avec un réservoir d'alimentation (6) pour alimenter le produit non-pasteurisé, une conduite d'entrée (8a) pour transporter le produit non-pasteurisé, un circuit de pasteurisation (25) pour pasteuriser le produit (P), le circuit de pasteurisation (25) comprenant au moins un premier échangeur de chaleur (10) et une conduite de sortie (8b) pour transporter le produit pasteurisé, **caractérisée en ce que** le circuit de pasteurisation (25) comprend un réservoir tampon (2) adapté à garder le produit (P) pendant un temps de contact constant prescris pour la pasteurisation et en présence d'un débit fluctuant du produit (P) à travers le réservoir tampon (2), le réservoir tampon étant arrangé en aval du premier échangeur de chaleur (10), la quantité de produit non-pasteurisé par unité de temps, qui sort de la conduite d'entrée (8a) dans le circuit de pasteurisation (25) et dans le réservoir tampon (2), étant réglée par une première pompe (7) arrangée en aval du réservoir d'alimentation (6), le circuit de pasteurisation (25) comprenant une deuxième pompe (5) arrangée en aval du réservoir tampon (2), pour régler la quantité délivrée du produit pasteurisé par unité de temps hors du réservoir tampon (2) dans la conduite de sortie (8b), une commande (9) étant prévue pour calculer la quantité délivrée du produit pasteurisé par unité de temps à être alimentée hors de la conduite d'entrée (8a) dans le circuit de pasteurisation (25) et hors du circuit de pasteurisation (25) dans la conduite de sortie (8b) en fonction d'au moins un paramètre, le réservoir tampon (2) comprenant à son intérieur au moins une chicane pour contrôler la direction du débit du produit.

**2.** Installation selon la revendication 1, **caractérisée en ce que** la première pompe (7) est une pompe à débit variable.

**3.** Installation selon la revendication 1 ou 2, **caractérisée en ce que** la deuxième pompe (5) est une pompe à débit variable.

**4.** Installation selon l'une des revendications précédentes, **caractérisée en ce qu'**un capteur de niveau de remplissage (3) est prévu pour mesurer le niveau de remplissage dans le réservoir tampon (2).

**5.** Installation selon l'une des revendications précédentes, **caractérisée en ce que** le réservoir tampon (2) comprend au moins une couche d'isolation pour l'isoler thermiquement de l'environnement, qui entoure ses parois entièrement.

6. Procédé pour l'opération d'une installation selon l'une des revendications précédentes pour pasteuriser un produit liquide (P) consistant d'au moins un composant liquide qui peut être pompé, le produit non-pasteurisé étant alimenté hors d'un réservoir d'alimentation (6) dans une conduite d'entrée (8a), ultérieurement étant pasteurisé dans un circuit de pasteurisation (25) et le produit pasteurisé étant alimenté dans une conduite de sortie (8b), **caractérisé en ce que** le produit (P) est alimenté dans un réservoir tampon (2) dans le circuit de pasteurisation (25) et est gardé dans ledit réservoir tampon pendant un temps de contact constant prescris pour la pasteurisation et en présence d'un débit fluctuant du produit (P) à travers le réservoir tampon (2).

7. Procédé selon la revendication 6, **caractérisé en ce que** le produit (P) est alimenté hors de la conduite d'entrée (8a) dans le circuit de pasteurisation (25) dans le réservoir tampon (2) à l'aide d'une première pompe (7) arrangée en aval du réservoir d'alimentation (6), particulièrement une pompe à débit variable, la quantité alimentée du produit non-pasteurisé par unité de temps étant réglée par la première pompe (7).

8. Procédé selon la revendication 6 ou 7, **caractérisé en ce que** le produit pasteurisé est alimenté hors du réservoir tampon (2) à l'aide d'une deuxième pompe (5) arrangée en aval du réservoir tampon (2), particulièrement une pompe à débit variable, dans la conduite de sortie (8b), la quantité de délivrance du produit pasteurisé par unité de temps hors du réservoir tampon (2) étant réglée par la deuxième pompe (5).

9. Procédé selon la revendication 7 ou 8, **caractérisé en ce que** la quantité de délivrance du produit (P) transporté par la première et/ou la deuxième pompe (7, 5) est calculée par une commande (9) en fonction d'au moins un paramètre et est ajustée par un élément de commande (14, 4) pour chaque pompe (7, 5).

10. Procédé selon l'une des revendications 6 à 9, **caractérisé en ce qu'**après arrêter la délivrance du produit final à une installation de traitement ultérieur, la délivrance du produit pasteurisé hors du circuit de pasteurisation (25) est effectuée par la commande (9).

11. Procédé selon la revendication 10, **caractérisé en ce qu'**après l'arrêt ou la réduction de la délivrance du produit final l'alimentation du produit non-pasteurisé dans le réservoir tampon (2) est réduite à une quantité minimale du produit par unité de temps et **en ce que** l'alimentation dans le réservoir tampon (2) est complètement arrêtée à l'aide de la commande (9) après un niveau maximale de remplissage du réservoir tampon (2) et/ou un temps d'arrêt maximale est atteint.

12. Procédé selon la revendication 10 ou 11, **caractérisé en ce que**, pendant l'arrêt de la délivrance du produit final, le transport du produit (P) peut être redémarré pendant un temps admissible d'interruption de la délivrance du produit final et, après le temps admissible d'interruption a passé, le produit (P) est déchargé de la conduite d'entrée (8a), du circuit de pasteurisation (25) et de la conduite de sortie (8b) en alimentant de l'eau (W) dans le réservoir d'alimentation (6) et en pompant l'eau (W) dans la conduite d'entrée (8a), ensuite dans le circuit de pasteurisation (25), ensuite dans la conduite de sortie (8b) et finalement dans une conduite de décharge (19).

13. Procédé selon l'une des revendications 6. à 12, **caractérisé en ce que** le niveau de remplissage du produit (P) dans le réservoir tampon (2) est mesuré par un capteur de niveau de remplissage (3).

14. Procédé selon l'une des revendications 6 à 13, **caractérisé en ce qu'**un niveau de remplissage dans le réservoir tampon (2) et/ou un niveau de remplissage dans un réservoir aseptique (21) et/ou un taux d'extraction du produit final (P) du réservoir aseptique (21) est utilisé par la commande (9) comme paramètre pour calculer la quantité de produit par unité de temps exigée à être alimentée hors de la conduite d'entrée (8a) dans le circuit de pasteurisation (25) et hors du circuit de pasteurisation (25) dans la conduite de sortie (8b).

Figur

EP 2 571 372 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2162115
- WO 0067598 A1
- NL 1024796 C2
- WO 03077685 A1
- US 2987082 A
- DE 3510412
- US 2002172745 A1